# EUROPÄISCHE PATENTSCHRIFT

(11) **EP 3 427 191 B1**
(45) Veröffentlichungstag und Bekanntmachung des Hinweises auf die Patenterteilung: **19.02.2020**
(21) Anmeldenummer: 17708454.8
(22) Anmeldetag: 27.02.2017
(51) Int. Cl.: G06K 19/077, G06K 19/07

(54) **TRANSPONDER, INSBESONDERE RFID TRANSPONDER, UND VERFAHREN ZUM BETREIBEN EINES, INSBESONDERE RFID, TRANSPONDERS**
TRANSPONDER, IN PARTICULAR RFID TRANSPONDER, AND METHOD FOR OPERATING AN, IN PARTICULAR RFID, TRANSPONDER
TRANSPONDEUR, NOTAMMENT TRANSPONDEUR RFID, ET PROCÉDÉ DE FONCTIONNEMENT D'UN TRANSPONDEUR, NOTAMMENT RFID

(30) Priorität: 29.04.2016 DE 102016207424
(43) Veröffentlichungstag der Anmeldung: 16.01.2019
(73) Patentinhaber: Siemens Aktiengesellschaft, 80333 München (DE)
(72) Erfinder: BERGES, Dominic, 80804 München (DE); APPEL, Sönke Christoph Wilhelm, 89077 Ulm (DE); ZIROFF, Andreas, 81671 München (DE)
(86) Internationale Anmeldenummer: PCT/EP2017/054492
(87) Internationale Veröffentlichungsnummer: WO 2017/186379

(56) Entgegenhaltungen:
- WO-A1-2015/013240
- DE-A1-102005 037 583
- DE-A1-102006 004 023
- DE-U1-202006 010 033

## Beschreibung

Die vorliegende Erfindung betrifft einen Transponder, insbesondere RFID-Transponder, gemäß dem Oberbegriff des Anspruchs 1. Darüber hinaus betrifft die vorliegende Erfindung ein Verfahren zum Betreiben eines, insbesondere RFID, Transponders gemäß dem Oberbegriff des Anspruchs 10.

Im Kontext der Industrie 4.0 gewinnt die Identifikation und Ortung von Menschen und Objekten eine immer größer werdende Bedeutung, wobei ein wichtiger Aspekt die kabellose Modalität ist.

Über die sogenannten Radio Frequency Identification (RFID) Systeme können Informationen von einem Tag (Transponder) zu einem Lesegerät (Interrogator, Reader) substituiert werden.

Ein solches System besteht gewöhnlich aus wenigen Lesegeräten und vielen Tags. Auch asymmetrische Komplexitäten sind denkbar, also der Informationsaustausch vom Lesegerät zum Tag oder ein Multiknotenszenario (z.B. Zigbee-Technologie), der Informationsaustausch zwischen allen anwesenden Tags und Lesegeräten.

Neben dem Informationsaustausch ist die telemetrische Information ein wesentlicher Bestandteil, um den Leistungshorizont des Systems zu erweitern. Elementarer Bestandteil der Telemeterie ist die Ortung und Ausrichtungsbestimmung, die gesondert hervorgehoben werden soll.

Die Ausrichtungsbestimmung ist hierbei gleichbedeutend mit der Lagebestimmung und wird ohne Beschränkung der Allgemeinheit in Roll-, Nick- und Gierwinkel gemessen. Wohingegen die Ortung gleichbedeutend mit der Positionsbestimmung ist, die ohne Beschränkung der Allgemeinheit in Höhe, Tiefe und Länge oder Azimut, Elevation und Abstand gemessen wird.

Mit Systemen, die die genannte Vielzahl an Informationen erheben und übertragen können, lässt sich ein umfangreiches Portfolio an Anwendungen verwirklichen. Beispielsweise kann ein Monitoring in der Logistik umgesetzt und die damit einhergehenden Applikationsmöglichkeiten, wie ein intelligentes Lager usw., verwirklicht werden. Oder es kann eine Last an einem Kran geortet und lagebestimmt werden, um diese dann optimal zu regeln. Viele Weitere Applikationen können mit solchen Systemen realisiert werden, auf die hier nicht weiter eingegangen wird.

Dieses System soll hinsichtlich gewisser Leistungsparameter, wie der Robustheit der Kommunikation, der Reichweite zwischen dem Tag und dem Lesegerät (Dämpfung ist proportional zur Reichweite: Dämpfung∼r⁻⁴), der Leistungsaufnahme des Tags, der Baugröße, der Komplexität der Schaltung des Tags und der einhergehenden Kosten - in einer komplexen Umwelt - mit einer Vielzahl von elektromagnetischen (EM) Effekten, wie Multipfadreflexionen und Shadowing, bestehen. Die Multipath-Ausbreitung ist ein Effekt, der die Performance stark reduziert. Die Multipath Herausforderung adressiert die Effekte, die durch Mehrwegeausbreitungen entstehen. Das heißt, dass ein Signal mehrfach in einem Raum, in dem gemessen wird, reflektiert wird und mehrfach beim Empfänger eintrifft. Das Gesamtsignal, welches sich aus der Überlagerung der Signale aus allen Pfaden zusammenaddiert, überlagert sich zu einem nicht interpretierbaren Gesamtdatenstrom.

Die Reichweite, Mehrwegeausbreitung, Lagebestimmung und Systemkomplexität werden als Key Performance Indikatoren identifiziert, wobei diese unmittelbar im Zusammenhang zur Robustheit der Signal-Kommunikation steht. Desweiteren treten Dynamikprobleme im Lesegerät auf, wenn sich der Abstand zwischen dem Tag und dem Lesegerät auf eine minimale Distanz verringert.

Bekannt sind Gesamtsysteme bestehend aus mindestens einem Lesegerät und aus mindestens einem Transponder. Der Transponder kann relativ zum Lesegerät geortet werden und/oder ermöglicht einen Datenaustausch. Um das System für eine Lokalisierung hinsichtlich der Reichweite zu befähigen, werden Radar Lesegeräte verwendet. Soll zusätzlich die Winkelinformation ausgewertet werden, kommen MIMO Konzepte zum Tragen - ein sogenanntes MIMO-Lesegerät. Um einen möglichst großen Raumsektor zu erfassen, werden omnidirektionale Antennenkonfigurationen verwendet. Auch gerichtete Antennenkonfigurationen finden Verwendung, die beispielsweise die Reichweite erhöhen und im Kontext einer Auflösungsverbesserung die Raumgebiete von Interesse abtasten können. So liegt die Leistungslimitierung etwa im 24 GHz ISM-Band bei 100mW erip ("equivalent isotropically radiated power"). Die Kommunikationsauswertung wird durch eine entsprechende Basisbandverarbeitung sichergestellt.

Dabei basiert das Tag auf einer Backscatter(BS)-Antennenfuß-punktmodulation. Die Funktionsweise eines üblichen Backscatter-Tags ist die Folgende: Anstatt im Tag den RF-Träger zu erzeugen, wird der im Reader erzeugte RF-Träger wiederverwendet, mit einer Modulation beauftragt und kontrolliert reflektiert. Die Abstrahlung erfolgt möglichst omnidirektional, um unabhängig der Ausrichtung des Tags ein Signal am Lesegerät zu empfangen. Auf diese Weise kann eine leistungseffiziente Funkkommunikation mit einem einfachen HW-Design realisiert werden, bei der die Hardwarekomplexität auf die Lesegerätseite verlagert wird. Auf der Tag-Seite wird die Transceiverkette vermieden.

Bei diesem bekannten System sind je nach Auslegung der Antennensysteme und des Frequenzbandes lediglich limitierte Reichweiten der Funkkommunikation und Ortung möglich und stellen für eine Vielzahl von Applikationen eine Restriktion dar. So werden etwa hohe Reichweiten in der Logistik vorausgesetzt, um von einer Basisstation mit einem Lesegerät, Container mit einem Tag zu identifizieren, zu orten und zu verfolgen. Desweiteren ist es nicht möglich, mit solch einem System die Lage des getagten Objekts zu bestimmen.

Aus der WO 2015/013240 A1 ist ein System zur Vermeidung von Kollisionen von Fahrzeugen mit Fußgängern bekannt bei dem ein tragbarer Radarreflektor derart ausgestaltet ist, dass er von einem Fahrzeug ausgehende Radarstrahlungen zurückwirft.

Es ist Aufgabe der vorliegenden Erfindung, eine Lösung anzugeben, die die Nachteile des Standes der Technik überwinden.

Diese Aufgabe wird durch einen, insbesondere RFID-, Transponder mit den Merkmalen des Patentanspruchs 1 sowie durch das Verfahren zum Betreiben eines, insbesondere RFID-, Transponders gemäß den Merkmalen des Anspruchs 10 gelöst.

Beim erfindungsgemäßen Transponder ist zumindest eine erste Linie von zumindest einer ersten und zumindest einer zweiten jeweils nach Art des Backscatter ausgestalteten und betriebenen Antennen gebildet, und derart funktional miteinander verbunden, dass sie bei Empfang eines Signales, das Signal nach Art des Backscatter durch geformte Abstrahlcharakterisik zurückstreuen.

Nach Art Backscatter ausgestaltet und funktional verbunden heißt hierbei im Sinne der Erfindung, dass beispielsweise eine Antenne und ein reflektierender Teil ein Backscatterelement bilden, welches eine Backscatterfunktion verwirklicht. Erfindungsgemäß weitere vorgesehene Antennen sind stets derart funktional betrieben, dass sie auch stets eine Backscatterfunktion verwirklichen.

Beim erfindungsgemäßen Verfahren zum Betreiben eines, insbesondere RFID-, Transponders wird zumindest eine erste Linie von zumindest einer ersten und zumindest einer zweiten jeweils nach Art des Backscatter ausgestalteten und betriebenen Antenne gebildet, und derart funktional miteinander verbunden, dass sie bei Empfang eines Signals mit im einfachsten Fall gleicher Modulationsfrequenz mit einem in Bezug zueinander, insbesondere steuerbaren, Phasenoffset, das Signal nach Art des Backscatter zurückstreut.

Die durch die Erfindung erreichte Reichweitenerhöhung wird durch die erfindungsgemäße Ausgestaltung der Tags drastisch ausgedehnt. Zudem weist es eine geringe Hardware-Komplexität auf, d.h. insbesondere, dass die Hardware Komplexität von der Radar-Seite auf eine geringere Hardwarekomplexität auf Backscatter-Seite transferiert wird, und damit einhergehend eine Kosteneffizienz, in dem erfindungsgemäß fokussiert abgestrahlt und je nach konkreter Ausbildung der Erfindung die Richtwirkung gesteigert wird, und damit eine mit der Zunahme der Fokussierung direkt proportionale Reichweitenerhöhung realisiert wird.

Dabei ist die erfindungsgemäße Ausgestaltung unabhängig von einer Antennenkonfiguration eingesetzter Lesegeräte. Der Einsatz der Fokussierung entfaltet im Zusammenhang mit dem Betrieb nach Art des Backscatters diese Vorteile sowohl beim Empfang als auch beim Senden.

Vorteilhafte Weiterbildungen der vorliegenden Erfindung sind Gegenstand der abhängigen Ansprüche.

Eine wesentliche Möglichkeit der Erfindung und seiner Weiterbildungen ist durch gezielte Durchstimmung der Backscatter-Array-Phase eine Leuchtturmsignalverhaltens-Generierung. Systembedingt rotieren Signalreflektionsmaxima um das Array. Durch Finden eines Maximums kann der Winkel des Backscatterarrays relativ zum Reader bestimmt werden. Dies ist durch den direkten Bezug von der Backscatterphasenkonfiguration mit dem Signalreflektionsmaximum möglich.

Die erfindungsgemäße Fokussierung wird durch die Antennenkonfiguration der Erfindung und deren Weiterbildungen ermöglicht, denn sie realisieren ein Beamforming.

Dabei weist das erfindungsgemäße Tag die Flexibilität auf, passiv, semipassiv oder aktiv aufgebaut zu sein, je nach Anforderungen an das Tag.

Gemäß Erfindung erfolgt das Beamforming und die damit verbundene Ausleuchtung zumindest im zweidimensionalen Raum. Durch Weiterbildung der Erfindung kann dies auf den dreidimensionalen Raum ausgeweitet werden. Für die Lösung im zweidimensionalen Raum werden mindestens zwei Antennen auf einer Linie angeordnet, wobei alle Antennen mit gleicher Modulationsfrequenz beaufschlagt werden. Erfindungsgemäß wird weiterhin durch die Steuerung der Phase zwischen den Antennenelementen ein dezidierter Abstrahlwinkel mit Richtwirkung erzeugt werden.

So wird gemäß Erfindung bei einer ersten und zweiten Antenne jeweils im einfachsten Fall mit gleicher Modulationsfrequenz beaufschlagt, wobei bei der zweiten Antenne relativ zur ersten Antenne ein individueller Phasenoffset erzeugt wird.

Weitergebildet wird dies durch Erhöhung der Antennenelemente, welche eine Vergrößerung der Apertur der Anordnung zur Folge hat und damit sowohl Richtwirkung als auch Reichweite erhöht.

Es ist auch möglich, dass Modulationsfrequenzen zwischen den Antennen unterschiedlich gewählt werden. Hierdurch kann das Beamforming digital im Nachhinein in dem signalverarbeitenden Teil des Lesegeräts realisiert werden. Ein derartiger Eingriff auf das Lesegerät erfolgt im Digitalteil des Gerätes und erfordert somit nur eine Softwareänderung.

Weitergebildet wird die Erfindung auch, wenn mindestens 3 Antennen in einer Ebene angeordnet werden. Hierdurch wird erreicht, dass ein dreidimensionaler Raum ausgeleuchtet werden kann, wobei die Antennen auch bei dieser Weiterbildung im einfachsten Fall mit der gleichen Modulationsfrequenz beaufschlagt werden und jeweils zueinander einen Phasenoffset aufweisen.

Das Phasenoffset kann entsprechend einer weiteren Weiterbildung eingestellt werden, so dass eine Adaption erfolgen kann. Damit kann individuell die Hauptkeule des Antennendiagramms sowohl in Azimut als auch in Elevation ausgehend von einem lokal definierten Koordinatensystem des Antennenarrays erzeugt werden.

Auch hier gilt wieder, wie im zweidimensionalen Raum, dass ein digitales Beamforming mittels unterschiedlicher Modulationsfrequenzen realisiert werden können.

Auch hier bewirkt eine Weiterbildung, bei der die Antennenanzahl erhöht wird, dass die Richtwirkung und somit die Reichweite erhöht werden.

Vorteilhaft weitergebildet wird dies, wenn der Anordnung eine Logik- und/oder Speichereinheit hinzugefügt wird. Hierdurch lassen sich gemäß erfinderischer Verfahrensweise unterschiedliche Sätze von Modulationsfrequenzen, Phasenoffsets und Reflexionskoeffizienten speichern, die beispielsweise unterschiedliche Charakteristika definieren, die gemäß erfinderischen Verfahren und Weiterbildungen adaptiv abhängig vom jeweiligen Umfeld, insbesondere mittels der Logik, ausgewählt und auf die nach Art des Backscatter funktional eingerichteten Antennen aufgeprägt werden, so dass eine Anpassung an die jeweiligen Umstände gewährleistet ist, oder unabhängig vom Umfeld einem steten Wechsel in festgelegten, insbesondere sehr kurzen, Zeitabständen aufgeprägt wird, so dass ein optimales Rückstrahlen des Transponders durch die Antennen, da es ja einer festgelegten Auswahlreihenfolge folgt - quasi, zufällig geschieht.

Es lassen sich so auch informationstragende Symbole, sowie Identifikationsinformationen im Speicher hinterlegen und beispielsweise durch die Logikeinheit für die Übermittlung mittels der Antennen auswählen. Ebenso lassen sich Muster hinterlegen, die definieren, ob und welche Antennen einzeln inaktiv geschaltet werden.

Im Fall eines ausgerichteten Backscatter-Array-Signals zum Reader wirkt die erfindungsgemäße Antennen-Anordnung aufgrund der Richtwirkung zudem für eine verringerte Leistungsdegradierung aufgrund des Mehrwegeausbreitungseffekt. Der Mehrwegeausbreitungseffekt verschlechtert die Systemleistung. Durch die Richtwirkung wirkt der kürzeste Signal-Pfad zum Lesegerät dominant im Vergleich zu den anderen Signal-Pfaden und kann somit seitens des Lesegerätes mit einer höheren Wahrscheinlichkeit eindeutig interpretiert werden.

Erfindungsgemäß kann aufgrund der bei der Richtwirkung gegebenen Reziprozität auch die Ausrichtung des Tags erfasst werden, so dass die Lage und oder Position des Backscatter-Transponder-Arrays messbar ist.

Des Weiteren wird gemäß Weiterbildung der Erfindung der Raumwinkel der Richtwirkung (Keule, Beam) frei wählbar, in dem durch individuelles Regulieren der Phasenoffsets relativ zu den einzelnen Antennen und/oder abhängig von der dimensionalen Auslegung der Antennenanordnung, d.h. auf einer Linie (2D) oder Ebene (3D), und/oder der Anzahl der Antennenelemente eine beliebige Granularität von Raumwinkel sowie Abtastung hervorgebracht werden.

Die Erfindung umfasst dabei auch Weiterbildungen, mit denen so genannte Beamsteering Technologien verwirklicht werden können.

Beispielsweise kann als eine erste Beamsteering Technologie eine so genannte "Lock and Track" Technik verwirklicht werden, wenn die Erfindung derart weitergebildet wird, dass das Tag den Raum absucht und eine Konnektivität zum Lesegerät findet und dazu eine maximale Signalleistung bei einem entsprechenden Raumwinkel auf Seiten des Tags oder auf Seiten des Lesegeräts detektiert. Im Falle der Lesegerät-Empfangsleistungsdetektion wird die Information an den Tag weitergeleitet und somit eine dynamische Nachführung des Raumwinkels verwirklicht mit dem Ziel einer bestmöglichen Verbindung. Dies erfordert eine Reader-zu-Tag-Kommunikationsinfrastruktur. Im Fall der Empfangsleistungsdetektion auf Seiten des Tags erfolgt eine äquivalente Raumwinkelnachführung mit dem Vorteil, dass eine Lesegerät-zu-Tag-Kommunikationsinfrastruktur entfallen kann.

Eine weitere Beamsteering Technologie kann verwirklicht werden, wenn die Erfindung derart weitergebildet wird, dass ein willkürliches Beamforming erfolgt. Hierzu werden alle möglichen Raumwinkel mit einem individuellen Muster in einer festgelegten Zeitperiode angesteuert. Hierdurch wird erreicht, dass zumindest zu einem Zeitpunkt eine maximale Signalleistung an dem Lesegerät anliegt. Das Tag ist dabei autark. Einen weiteren Vorteil entfaltet diese Weiterbildung, da es eine erhöhte Anzahl von Tags im Einsatz in der Nähe eines Lesegerätes unterstützen kann, weil durch das Iterieren der Muster zufällig immer disjunkte Tags optimal zum Lesegerät ausgerichtet sein können.

Bei einer Systemauslegung mit mehreren Tags ist es ferner möglich, die Erfindung derart weiterzubilden, dass eine Frequency Division Multiple Access, FDMA, Time Division Multiple Access, TDMA, Code-Division Multiple Access, CDMA, bzw. einer Kombination hieraus, die Differenzierung der Tags ermöglicht.

Ein weiterer Vorteil des Zu- und Abschaltens von einzelnen Antennen ist zudem - abhängig vom Dynamikbereich des eingesetzten Lesegerätes - dass ein Array Gain, insbesondere bei der Nahbereichsmessung, d.h. Abstand Richtung "0", variiert werden kann und zur Entspannung des Dynamikproblems führen kann.

Ist die aktuelle Phase, d.h. der konfigurierte Phasenoffset der Antennen, eines Tags dem Lesegerät bekannt, so lässt sich auch die Ausrichtung des Tags im Raum relativ zum Lesegerät bestimmen. Dies erfolgt, in dem die Lage durch das Lesegerät anhand der Phaseninformation geschätzt wird. Diese Zusatzinformation ermöglicht weitere Anwendungsfelder, in denen beispielsweise getagte Objekte in Position und Ausrichtung ausgeregelt werden sollen.

Die Erfindung und deren Weiterbildungen ermöglichen also ein Tag, dass je nach Anforderungen mit einer insgesamt signifikant geringeren Hardwarekomplexität realisiert werden und folglich kostengünstigen Implementierung. Dabei wird die Hardwarekomplexität auf Radar-Seite eingespart und auf den Transponder verlagert, wo sie dank Erfindung hardwarekomplexitätsärmer realisiert werden kann.

Im Vergleich zu einer einfachen Richtantenne, wird die erfindungsgemäße steuerbare Richtwirkung erfindungsgemäß durch das System erzeugt, so dass ein Raumbereich ausgeleuchtet werden kann. Dabei werden beispielsweise durch Phasensteuerung verschiedene Raumbereiche sukzessive ausgeleuchtet. Des Weiteren werden die Diversititätstechnologien auf Backscatterseite möglich. Die mögliche Gesamtsystem-Diversität erhöht sich damit gegenüber dem Stand der Technik erheblich. Die Folge ist u.a. auch eine höhere Reichweite, eine erhöhte Anzahl an maximal auslesbaren Tags im Empfangsbereich des Lesegeräts, ein verringerter Einfluss von Mehrwegeausbreitungen auf die Kommunikation zwischen Transponder und Lesegerät sowie eine Ausrichtungsbestimmung des Tags.

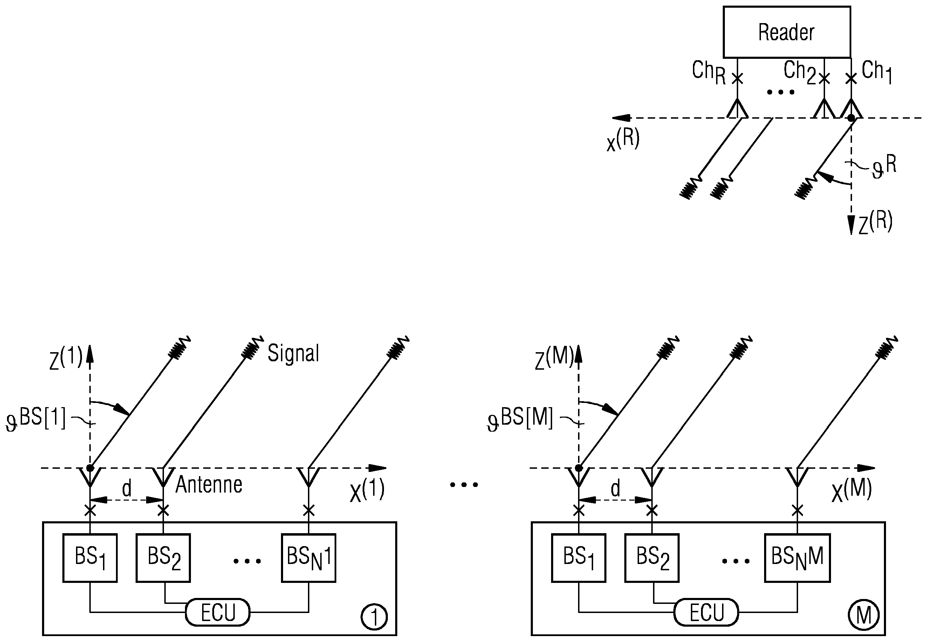

Die vorliegende Erfindung wird nun anhand von dem in der Figur dargestellten Ausführungsbeispiel der Erfindung näher erläutert. Dabei zeigt die einzige Figur
- FIG: ein Ausführungsbeispiel der erfindungsgemäßen Transponder, die gemäß einem Ausführungsbeispiel des erfindungsgemäßen Verfahrens mit einem üblichen Reader READER betrieben werden.

Die nachfolgend näher geschilderten teilweise nicht dargestellten Ausführungsbeispiele bzw. Ausgestaltungen einzelner Elemente hiervon stellen bevorzugte Ausführungsformen der vorliegenden Erfindung dar. Diese ist jedoch nicht darauf beschränkt.

FIG zeigt eine Anordnung, bei der ein Ausführungsbeispiel der erfindungsgemäßen Transponder (Tags) TAG₁...TAG_{M} dargestellt sind, die gemäß einem Ausführungsbeispiel des erfindungsgemäßen Verfahrens mit einem üblichen Reader READER betrieben werden.

Bei der dargestellten Anordnung ist zum einen der Reader READER gemäß Stand der Technik verfügbar, der zur Verwirklichung dieses Ausführungsbeispiels jedoch so ausgestaltet sein und betrieben werden kann, dass er Daten aus Tags auszulesen vermag.

Auch kann er fähig sein, Tags zu identifizieren und mittels Radartechnologie den Abstand zum Tag TAG₁...TAG_{M} bestimmen. Er kann die Ausrichtung der Tags TAG₁...TAG_{M} bestimmen. Da er mehrkanalig aufgebaut ist, also wie dargestellt eine Anzahl von R Kanälen CH₁...CH_{R} zur Verfügung hat, kann er seinen Winkel ϑ^{R} relativ zu den Tags TAG₁...TAG_{M} bestimmen.

Die durch drei Punkte angedeutete Anzahl von M Tags TAG₁...TAG_{M} sind jeweils als ein Backscatter Array ausgestaltet, die jeweils eine Anzahl von N^{m} Backscatteranordnungen mit je einer Antenne, die in einem Abstand d angeordnet sind, BS₁...BS_{N}^{m} aufweisen.

Ein derartiges Tag TAG₁...TAG_{N} ist so ausgestaltet, dass sich jede der Antennen mit einer individuellen Frequenz f_{m,n} modulieren lässt. Ferner lassen sich erfindungsgemäß die Phasen ϑ^{BS(m)} der Modulationen je Antenne verstimmen. Hierdurch lässt sich eine Richtwirkung erzeugen, so dass der kürzeste Pfad zum Lesegerät dominant zum Lesegerät READER gegenüber den anderen Pfaden wird und so das Signal hierrüber stärker als die übrigen Signale der anderen Pfade empfangen wird und eindeutig seitens des Lesegerätes READER interpretiert werden kann. Des Weiteren kann das Gesamtsystem folgende zusätzliche Eigenschaften aufweisen: Das Radar des Lesegerätes ist hybrid ausgelegt und kann sowohl die geometrischen Daten zum Tag bestimmen (Ort und Ausrichtung) als auch die bildgebenden Hintergrundinformationen messen (Raumreflektionen).

Die Erfindung ist nicht auf die angegebenen Ausführungsbeispiele beschränkt. Sie umfasst vielmehr alle denkbaren lediglich durch den Schutzbereich der Ansprüche beschränkten Variationen und/oder Kombinationen einzelner Elemente hiervon.

## Patentansprüche

1. Transponder, insbesondere RFID-Transponder, derart ausgestaltet, dass zumindest eine erste Linie von zumindest zwei jeweils nach Art des Backscatter ausgestalteten und betriebenen Antennen gebildet ist, und derart funktional miteinander verbunden sind, dass sie bei Empfang eines Signales, das Signal nach Art des Backscatter durch geformte Abstrahlcharakterisik zurückstreuen,
dadurch gekenzeichnet, daß
die funktionale Verbindung derart ausgestaltet ist, dass einzelne der Antennen aktiviert und/oder deaktiviert werden können.

2. Transponder nach dem vorhergehenden Anspruch, **dadurch gekennzeichnet, dass** die nach Art des Backscatter ausgestalteten und betriebenen Antennen mit jeweils gleicher Modulationsfrequenz mit einem in Bezug zueinander, insbesondere steuerbaren, Phasenoffset, das Signal zurückstreuen.

3. Transponder nach einem der beiden vorhergehenden Ansprüche, **dadurch gekennzeichnet, dass** die nach Art des Backscatter ausgestalteten und betriebenen Antennen mit jeweils gleichem Phasenoffset mit einer in Bezug zueinander, insbesondere steuerbaren, Modulationsfrequenz, das Signal zurückstreuen.

4. Transponder nach dem vorhergehenden Anspruch, **dadurch gekennzeichnet, dass** zumindest eine dritte nach Art des Backscatter funktional ausgestaltete und betriebene Antenne derart funktional und örtlich angeordnet werden, dass die erste, zweite und dritte Antenne eine Fläche aufspannen.

5. Transponder nach einem der vorhergehenden Ansprüche, **dadurch gekennzeichnet, dass** mit den Antennen eine, insbesondere zumindest teilweise durch Logikschaltungen, verwirklichte Steuereinrichtung verbunden ist.

6. Transponder nach dem vorhergehenden Anspruch, **dadurch gekennzeichnet, dass** die Steuereinrichtung als, insbesondere programmierbare, Logikschaltung, ausgestaltet ist.

7. Transponder nach einem der zwei vorhergehenden Ansprüche, **dadurch gekennzeichnet, dass** die Steuereinrichtung mit einer Speichereinrichtung funktional verbunden ist.

8. Verfahren zum Betreiben eines, insbesondere RFID-, Transponders, **dadurch gekennzeichnet, dass** zumindest eine erste Linie von zumindest einer ersten und zumindest einer zweiten jeweils nach Art des Backscatter ausgestalteten und betriebenen Antennen gebildet wird, und derart funktional miteinander verbunden sind, dass sie bei Empfang eines Signales, das Signal nach Art des Backscatter durch geformte Abstrahlcharakterisik zurückstreuen, wobei der Transponder derart angesteuert wird, dass einzelne Antennen aktiviert und/oder deaktiviert werden.

9. Verfahren nach dem vorhergehenden Anspruch, **dadurch gekennzeichnet, dass** die nach Art des Backscatter ausgestalteten und betriebenen Antennen bei Empfang eines Signales mit jeweils gleicher Modulationsfrequenz mit einem in Bezug zueinander, insbesondere steuerbaren, Phasenoffset, das Signal nach Art des Backscatter zurückstreuen

10. Verfahren, nach dem vorhergehenden Anspruch, **dadurch gekennzeichnet, dass** die nach Art des Backscatter ausgestalteten und betriebenen Antennen bei Empfang eines Signales mit jeweils gleichem Phasenoffset mit einer in Bezug zueinander, insbesondere steuerbaren, Modulationsfrequenz, das Signal nach Art des Backscatter zurückstreuen.

11. Verfahren nach dem vorhergehenden Anspruch, **dadurch gekennzeichnet, dass** diese Ansteuerung derart durchgeführt wird, dass ein Aktivieren und/oder Deaktivieren derart abwechselnd erfolgt, dass jeweils für eine Zeitdauer ein sich unterscheidender Satz von Antennen aktiv betrieben wird.

12. Verfahren nach dem vorhergehenden Anspruch, **dadurch gekennzeichnet, dass** die Ansteuerung derart durchgeführt wird, dass die durch das Aktivieren und/oder Deaktivieren betriebenen Sätze von Antennen sich zyklisch wiederholen.

13. Verfahren nach den beiden vorhergehenden Ansprüchen, **dadurch gekennzeichnet, dass** eine Adaption derart erfolgt, dass das Aktivieren und/oder Deaktivieren einzelner Antennen auf Grundlage einer Sendeleistungsermittlung erfolgt.

## Claims

1. Transponder, in particular RFID transponder, configured in such a manner that at least one first line of at least two antennas is formed, which antennas are each configured and operated in the backscatter manner and are functionally connected to one another in such a manner that, upon receiving a signal, they scatter the signal back in the backscatter manner by means of a formed radiation characteristic, **characterized in that** the functional connection is configured in such a manner that individual ones of the antennas can be activated and/or deactivated.

2. Transponder according to the preceding claim, **characterized in that** the antennas configured and operated in the backscatter manner scatter the signal back with the same modulation frequency in each case with a phase offset, in particular a controllable phase offset, with respect to one another.

3. Transponder according to one of the two preceding claims, **characterized in that** the antennas configured and operated in the backscatter manner scatter the signal back with the same phase offset in each case with a modulation frequency, in particular a controllable modulation frequency, with respect to one another.

4. Transponder according to the preceding claim, **characterized in that** at least one third antenna functionally configured and operated in the backscatter manner is functionally and locally arranged in such a manner that the first, second and third antennas span an area.

5. Transponder according to one of the preceding claims, **characterized in that** a control device, in particular a control device implemented at least partially by means of logic circuits, is connected to the antennas.

6. Transponder according to the preceding claim, **characterized in that** the control device is in the form of a logic circuit, in particular a programmable logic circuit.

7. Transponder according to one of the two preceding claims, **characterized in that** the control device is functionally connected to a memory device.

8. Method for operating a transponder, in particular an RFID transponder, **characterized in that** at least one first line of at least one first and at least one second antenna is formed, which antennas are each configured and operated in the backscatter manner and are functionally connected to one another in such a manner that, upon receiving a signal, they scatter the signal back in the backscatter manner by means of a formed radiation characteristic, wherein the transponder is controlled in such a manner that individual antennas are activated and/or deactivated.

9. Method according to the preceding claim, **characterized in that** the antennas configured and operated in the backscatter manner, upon receiving a signal, scatter the signal back in the backscatter manner with the same modulation frequency in each case with a phase offset, in particular a controllable phase offset, with respect to one another.

10. Method according to the preceding claim, **characterized in that** the antennas configured and operated in the backscatter manner, upon receiving a signal, scatter the signal back in the backscatter manner with the same phase offset in each case with a modulation frequency, in particular a controllable modulation frequency, with respect to one another.

11. Method according to the preceding claim, **characterized in that** this control is carried out in such a manner that activation and/or deactivation is/are alternately carried out such that a differing set of antennas is respectively actively operated for a period.

12. Method according to the preceding claim, **characterized in that** the control is carried out in such a manner that the sets of antennas operated by the activation and/or deactivation are cyclically repeated.

13. Method according to the two preceding claims, **characterized in that** an adaptation is carried out in such a manner that individual antennas are activated and/or deactivated on the basis of a determination of the transmission power.

## Revendications

1. Transpondeur, notamment transpondeur RFID, conformé de manière à former au moins une première ligne d'au moins deux antennes conformées et fonctionnant chacune à la façon de backscatter et à les relier entre elles fonctionnellement de manière à ce qu'à la réception d'un signal elles rediffusent le signal à la manière du backscatter par caractéristique de rayonnement conformée,
**caractérisé en ce que** la liaison fonctionnelle est conformée de manière pouvoir activer et/ou désactiver individuellement des antennes.

2. Transpondeur suivant la revendication précédentes, **caractérisé en ce que** les antennes conformées et fonctionnant à la manière du backscatter rediffusent le signal à, respectivement, la même fréquence de modulation avec un décalage de phases les unes par rapport aux autres, notamment pouvant être commandé.

3. Transpondeur suivant l'une des deux revendications précédentes, **caractérisé en ce que** les antennes conformées et fonctionnant à la manière du backscatter rediffusent le signal avec, respectivement, le même décalage de phases à une fréquence de modulation, les unes par rapport aux autres, pouvant être notamment commandé.

4. Transpondeur suivant la revendication précédente, **caractérisé en ce qu'**au moins une troisième antenne, conformée fonctionnellement et pouvant fonctionner à la manière du backscatter, est disposée fonctionnellement et spatialement, de manière à ce que la première, deuxième et troisième antennes soient dans une surface.

5. Transpondeur suivant l'une des revendications précédentes, **caractérisé en ce qu'**à l'antenne est relié un dispositif de commande, réalisé notamment, au moins en partie, par des circuits logiques.

6. Transpondeur suivant la revendication précédente, **caractérisé en ce que** le dispositif de commande est conformé en circuit logique, notamment programmable.

7. Transpondeur suivant l'une des deux revendications précédentes, **caractérisé en ce que** le dispositif de commande est relié fonctionnellement à un dispositif de mise en mémoire.

8. Procédé pour faire fonctionner un transpondeur, notamment RFID, **caractérisé en ce que** l'on forme au moins une première ligne d'au moins une première et d'au moins une deuxième antennes conformées et fonctionnant chacune à la manière du backscatter et reliées entre elles fonctionnellement, de manière à ce qu'à la réception d'un signal, elles rediffusent le signal à la manière du backscatter par une caractéristique de rayonnement conformée, le transpondeur étant commandé de manière à ce que des antennes individuelles soient activées et/ou désactivées.

9. Procédé suivant la revendication précédente, **caractérisé en ce que** les antennes conformées et fonctionnant à la manière du backscatter, à la réception d'un signal ayant, respectivement, la même fréquence de modulation avec un décalage de phase les unes par rapport aux autres, pouvant notamment être commandé, rediffusent le signal à la manière du backscatter.

10. Procédé suivant la revendication précédente, **caractérisé en ce que** les antennes conformées et fonctionnant à la manière du backscatter, à la réception d'un signal ayant, respectivement, le même décalage de phases, ayant une fréquence de modulation les unes par rapport aux autres pouvant être notamment commandée, rediffusent le signal à la manière du backscatter.

11. Procédé suivant la revendication précédente, **caractérisé en ce que** cette commande est effectuée de manière à effectuer une activation et/ou une désactivation en alternance, de façon à ce que, respectivement, un jeu différent d'antennes soit mis en fonctionnement activement pendant une durée.

12. Procédé suivant la revendication précédente, **caractérisé en ce que** l'on effectue la commande de manière à ce que les jeux d'antennes, mis en fonctionnement pendant l'activation et/ou la désactivation se répètent cycliquement.

13. Procédé suivant les deux revendications précédentes, **caractérisé en ce que** l'on effectue une adaptation de manière à effectuer l'activation et/ou la désactivation de diverses antennes sur la base d'une détermination de puissance d'émission.
